# EUROPÄISCHE PATENTSCHRIFT

(11) **EP 1 275 472 B1**
(45) Veröffentlichungstag und Bekanntmachung des Hinweises auf die Patenterteilung: **04.04.2007**
(21) Anmeldenummer: 02009445.4
(22) Anmeldetag: 25.04.2002
(51) Int. Cl.: B24B 39/06, B24B 39/00

(54) **Verfahren und Werkzeug zum Walzen eines Werkstücks und Anordnung aus einem Walzwerkzeug und einem Werkstück**
Burnishing tool and method and assembly of burnishing tool and workpiece
Procédé et outil d'écrouissage ainsi qu' ensemble comprenant un outil d'écrouissage et une pièce

(30) Priorität: 12.07.2001 DE 10133314
(43) Veröffentlichungstag der Anmeldung: 15.01.2003
(73) Patentinhaber: Ecoroll AG, Werkzeugtechnik, 29227 Celle (DE)
(72) Erfinder: Ostertag, Alfred, Dipl.-Ing., 29229 Celle (DE)
(74) Vertreter: Castell, Klaus

(56) Entgegenhaltungen:
- EP-A- 0 353 376
- DE-A- 19 534 631
- DE-C- 4 015 205
- FR-A- 864 956
- US-A- 2 575 938
- US-A- 3 911 707

## Beschreibung

Die Erfindung betrifft ein Verfahren zum Walzen eines Werkstücks mit einem Walzwerkzeug mit mehreren in hydrostatischen Lagern angeordneten Wälzkörpern, ein Walzwerkzeug mit mehreren in hydrostatischen Lagern angeordneten Wälzkörpern.

Unter einem Walzwerkzeug mit mehreren in hydrostatischen Lagern angeordneten Wälzkörpern wird jedes Werkzeug verstanden, das dazu geeignet ist, über Wälzkörper Druckkräfte auf ein Werkstück auszuüben. Hierbei ist insbesondere das Glattwalzen und Festwalzen zu nennen. Dies sind technologisch sehr wirkungsvolle Verfahren zur Glättung von Oberflächen, insbesondere an metallischen Bauteilen und zur Verfestigung der Randschicht zwecks Erhöhung der Ermüdungsfestigkeit.

Für das Glattwalzen und Festwalzen werden unter anderem hydrostatische Walzwerkzeuge verwendet, wie sie in der EP 0 353 376 A1 beschrieben sind. Innenliegende hoch beanspruchte Werkstückkonturen sind für diese Werkzeuge meist nicht zugänglich. Bei Konturen, die so klein und komplex sind, dass die bekannten Werkzeuge wegen ihrer Baugröße nicht in die zu bearbeitenden Bereiche hineinpassen, muss auf andere Verfahren ausgewichen werden. Darüber hinaus erfordern die meist mit nur einer oder wenigen Kugeln oder Rollen ausgerüsteten Werkzeuge einen genau auf die Werkstückkontur abgestimmten dreidimensionalen Bewegungsablauf, der durch die Maschinensteuerung dargestellt werden muss. Dies führt zu einer aufwendigen Steuerung, die sich meist als unpraktikabel erweist.

Für die Randschichtverfestigung komplexer Konturen wird daher mangels besserer Verfahren häufig das Kugelstrahlverfahren eingesetzt. Ein Nachteil des Kugelstrahlverfahrens ist die geringe Eindringtiefe und damit die gegenüber Walzverfahren geringere Wirksamkeit. Die räumliche Enge bei komplexen Konturen führt darüber hinaus oft zum Stau des abfließenden, gebrauchten Strahlgutes. Dadurch wird die Wirksamkeit des Kugelstrahlverfahrens weiter reduziert.

Komplexe Konturen können auch mit einrolligen mechanischen Werkzeugen oder hydrostatischen Werkzeugen gewalzt werden. Der Walzprozess findet dann an einem Wirkpunkt zwischen Rolle und Werkzeugoberfläche statt. Die Flächenausdehnung des Werkstücks kann durch eine zweidimensionale Bewegung des Werkzeugs oder des Werkstücks erreicht werden. Hierbei ist beispielsweise die Rotation des Werkstücks und ein Vorschub des Werkzeugs zu nennen. Bei komplexen Flächen wie beispielsweise Freiformflächen wird eine Zustellbewegung in der dritten Achse überlagert.

Vereinzelt wurden auch Walzwerkzeuge mit mehreren auf einer Umfangslinie eines Werkzeugs angeordneten hydrostatischen Walzelementen eingesetzt. Diese Werkzeuge sind für die Bearbeitung innenliegender Kreislinien und bei einer Zustellbewegung des Werkzeugs oder Werkstücks auch für die Bearbeitung innenliegender Zylinderflächen geeignet. Der Einsatz dieser Werkzeuge ist jedoch auf derartige Anwendungen begrenzt.

Der Erfindung liegt daher die Aufgabe zugrunde, ein Verfahren zum Walzen eines Werkstücks mit einem Walzwerkzeug mit mehreren in hydrostatischen Lagern angeordneten Wälzkörpern bereitzustellen, das eine einfache und effektive Bearbeitung von Werkstücken ermöglicht.

Verfahrensmäßig wird diese Aufgabe mit einem Verfahren zum Walzen eines Werkstücks mit einem Walzwerkzeug mit mehreren in hydrostatischen Lagern angeordneten Wälzkörpern gelöst, bei dem während des Walzens nur ein Teil der Wälzkörper in Eingriff mit dem Werkstück ist und die nicht mit dem Werkstück in Eingriff stehenden Wälzkörper das hydrostatische Lager im wesentlichen abdichten.

Während bei allen bekannten Verfahren mit Walzwerkzeugen mit mehreren in hydrostatischen Lagern angeordneten Wälzkörpern während der gesamten Bearbeitung alle Wälzkörper kontinuierlich im Eingriff sind, liegt der Erfindung die Erkenntnis zugrunde, dass sich neue Möglichkeiten zur Herstellung von hydrostatischen Walzwerkzeugen ergeben, wenn für eine Abdichtung der nicht in Eingriff stehenden hydrostatischen Lager gesorgt wird. Diese Abdichtung wird auf einfache Art und Weise dadurch erzielt, dass die nicht mit dem Werkstück in Eingriff stehenden Wälzkörper das hydrostatische Lager abdichten. Dies erleichtert den Regelungsaufwand beträchtlich, da die laterale Bewegungskomponente des Wälzkörpers während des Zusammenwirkens mit dem Werkstück und dem außer Eingriff bringen des Wälzkörpers zur Abdichtung des hydrostatischen Lagers genutzt werden kann.

Es hat sich gezeigt, dass allein der auf die Wälzkörper wirkende hydrostatische Druck in der Regel ausreicht, um den Wälzkörper gegen eine umlaufende Fläche zu drücken, die als Ventilsitz wirkt.

Das erfindungsgemäße Verfahren erlaubt es, das Walzwerkzeug linear oder rotatorisch zu bewegen. Dies erlaubt es mit dem Walzwerkzeug beliebige Innen- und Außenflächen zu bearbeiten. Die Anordnung der hydrostatischen Lager auf einem Werkzeuggrundkörper kann auf das bearbeitende Profil des Werkstücks abgestimmt sein. Es können jedoch auch universell einsetzbare Walzwerkzeuge erstellt werden, die an den Werkstückoberflächen translatorisch und/oder rotatorisch bewegt entlang geführt werden.

Eine vorteilhafte Variante des erfindungsgemäßen Verfahrens sieht vor, dass bei einer linearen Bewegung des Walzwerkzeugs in einer Richtung mehrmals dieselbe Stelle des Werkstücks bearbeitet wird. Das Verfahren erlaubt es, mit nacheinander über das Werkstück geführten Wälzkörpern das Werkstück in eng aneinanderliegenden Bereichen zu bearbeiten. Bei Einsatz einer Vielzahl an Wälzkörpern können auch dieselben Stellen des Werkstücks mehrmals mit unterschiedlichen Wälzkörpern desselben Werkzeugs bearbeitet werden. Dies ermöglicht es, durch die Größe des Werkzeugs bzw. die Anzahl der Wälzkörper die Walzqualität zu erhöhen.

Die der Erfindung zugrunde liegende Aufgabe wird durch ein Walzwerkzeug gemäß den technischen Merkmalen des Anspruchs 4 gelöst.

Sofern die Anzahl der in hydrostatischen Lagern an einem Walzwerkzeug angeordneten Wälzkörpern über fünf gemeinsam mit Hydraulikflüssigkeit versorgte Lager hinausgeht, steigt die beim Walzvorgang benötigte hydraulische Flüssigkeitsmenge derart an, dass eine effektive Bearbeitung nicht mehr möglich ist. Daher wird erfindungsgemäß vorgeschlagen, dass bei Walzwerkzeugen mit mehreren in hydrostatischen Lagern angeordneten Wälzkörpern die hydrostatischen Lager im Bereich der Wälzkörper jeweils eine umlaufende Dichtung aufweisen wodurch die nicht mit einem werkstück stehenden wälzkörper das hydro-statische Lager im wesentlichen abdichten.

Bei bekannten hydrostatischen Lagern konnte die Zufuhr der Hydraulikflüssigkeit für alle Lager gemeinsam unterbunden werden. Eine individuelle Regelung der Hydraulikflüssigkeitszufuhr zu einzelnen Lagern war jedoch nicht möglich. Die Erfindung sieht daher vor, dass im Bereich der Wälzkörper eine umlaufende Dichtung vorgesehen ist. Eine an dieser Stelle angeordnete Dichtung ermöglicht es, durch eine laterale Bewegung der Wälzkörper die Dichtung zu öffnen bzw. zu schließen. Somit kann ohne eine zusätzliche Steuerung oder Regelung ein hydrostatisches Lager durch das Zusammenwirken zwischen Wälzkörper und Werkstück geöffnet oder abgedichtet werden.

Vorteilhaft ist es, wenn die hydrostatischen Lager einen Dichtspalt aufweisen, der derart bemessen ist, dass er als hydraulische Drossel wirkt. Der Dichtspalt hat in seiner Grundfunktion die Aufgabe, den Durchfluss von Hydraulikflüssigkeit zu ermöglichen oder zu unterbinden. Die Ausbildung als hydraulische Drossel hat den Vorteil, dass auch bei geöffnetem Dichtspalt nur eine durch die Drosselwirkung begrenzte Hydraulikflüssigkeitsmenge den Dichtspalt passiert, um in den Bereich zwischen Werkzeug bzw. Wälzkörper und Werkstück zu gelangen. Auch hierdurch wird die durch die Vielzahl an hydrostatischen Lagern austretende Hydraulikflüssigkeit reduziert.

Vorteilhaft ist es, wenn die Wälzkörper auf einer Fläche verteilt angeordnet sind.

Während bei bekannten Walzwerkzeugen die Wälzkörper auf einer geraden Umfangslinie angeordnet sind, sieht eine besondere Ausführungsart der Erfindung ein Walzwerkzeug vor, dass die Wälzkörper auf einer Fläche des Walzwerkzeugs verteilt angeordnet sind, um somit bei einem einzigen Bearbeitungsvorgang nicht nur eine Linie sondern auch eine Fläche des Werkstücks bearbeiten zu können.

Vorteilhaft ist es, wenn die Fläche in wenigstens einer Richtung gebogen ausgebildet ist. Die Fläche lässt sich somit an die Kontur des Werkstücks anpassen oder ermöglicht einen optimalen Eingriff zwischen Werkzeug und Werkstück, der leicht zu steuern ist.

Die Fläche, auf der die Wälzkörper verteilt angeordnet sind, kann auch konkave und konvexe Knicke aufweisen, wobei vorzugsweise im Bereich der Knickstellen Wälzkörper angeordnet sind. Dies ermöglicht eine individuelle Anpassung des Walzwerkzeugs an spezielle Werkstücke und deren optimale Bearbeitung.

Die Wälzkörper können auf dem Walzwerkzeug auf parallelen Linien oder parallelen Umfangslinien angeordnet werden. Vorteilhaft ist jedoch, wenn in Bearbeitungsrichtung hintereinander angeordnete Wälzkörper um eine Länge versetzt angeordnet sind. Das Versetzen der Wälzkörper führt dazu, dass nicht eine Stelle des Werkstücks mehrmals gewalzt wird sondern eng aneinanderliegende Stellen des Werkstücks bearbeitet werden, um eine Fläche möglichst gleichmäßig zu behandeln.

Bei einer Anordnung aus einem Walzwerkzeug mit mehreren in hydrostatischen Lagern angeordneten Wälzkörpern um einem Werkstück, bei der ein Teil der Wälzkörper entsprechend dem Abstand zwischen hydrostatischem Lager und Werkstück über das hydrostatische Lager vorsteht und ein anderer Teil mehr als diesen Abstand über das hydrostatische Lager vorsteht, variiert die Position des Wälzkörpers je nach dem, ob er mit dem Werkstück in Eingriff steht oder nicht.

Dies ermöglicht es, die Position des Wälzkörpers zur Abdichtung und Regelung einer Drossel zu nutzen. Bei einer besonders festen Anlage zwischen Wälzkörper und Werkstück wird die Drossel zwischen hydrostatischem Lager und Wälzkörper weit geöffnet, wodurch viel Hydraulikflüssigkeit austritt. Bei einem geringen Anpressdruck zwischen Wälzkörper und Werkstück wird die Drossel jedoch nur wenig geöffnet, sodass nur relativ wenig Hydraulikflüssigkeit das hydrostatische Lager verlässt. Wenn der Wälzkörper schließlich nicht mehr mit dem Werkstück in Eingriff steht, wird die Drossel zur Dichtung und dichtet vorzugsweise vollständig den Austritt von Hydraulikflüssigkeit ab.

Zwei Ausführungsbeispiele einer erfindungsgemäßen Vorrichtung sind in der Zeichnung dargestellt und werden im Folgenden näher erläutert.

Es zeigt
- Figur 1: einen Schnitt durch ein erfindungsgemäßes Werkzeug längst der in Figur 2 eingezeichneten Schnittlinie,
- Figur 2: eine Draufsicht auf ein erfindungsgemäßes Werkzeug mit einem schematisch eingezeichneten Werkstück,
- Figur 3: eine Seitenansicht des in Figur 2 gezeigten Werkzeugs,
- Figur 4: eine schematische Darstellung eines Ausschnitts aus der in Figur 2 als Detail z gezeigten Einzelheit,
- Figur 5: eine schematische Darstellung der Wirkweise der hydrostatischen Lager,
- Figur 6: schematisch eine Seitenansicht eines bogenförmigen Werkzeugs,
- Figur 7: eine Draufsicht auf das in Figur 6 gezeigte bogenförmige Werkzeug und
- Figur 8: eine schematische Ansicht eines Werkzeugs mit einer im wesentlichen planen Ebene.

Die in den Figuren gezeigten Walzwerkzeuge 1, 50 und 60 haben jeweils eine Vielzahl an hydrostatischen Lagern 2 bis 11, die in einem Werkzeugkörper 12 angeordnet sind. In den hydrostatischen Lagern ist als Wälzkörper jeweils eine Kugel 13 bis 22 angeordnet. Die einhüllende Linie der Kugeln 13 bis 22 kommt der schematisch eingezeichneten Werkstückkontor 23 nahe. Die Werkstückkontur 23 zeigt, dass nur die Bereiche des Werkzeugs 1 mit Wälzkörpern 13 bis 22 ausgerüstet sind, in denen die Bearbeitung der Kontur 23 des Werkstücks gefordert ist.

Die hydrostatischen Lager 2 bis 11 stehen mit einem zentralen Fluidversorgungsraum 24 in Verbindung, so dass alle hydrostatischen Lager 2 bis 11 gleichermaßen mit hydraulischer Flüssigkeit versorgt werden können.

Die Wälzkörper sind in einem Abstand a zueinander angeordnet. Dieser Abstand wird im Wesentlichen durch die Größe der Wälzkörper 13 bis 22 und die erforderliche Stabilität des Werkzeugkörpers 12 bestimmt.

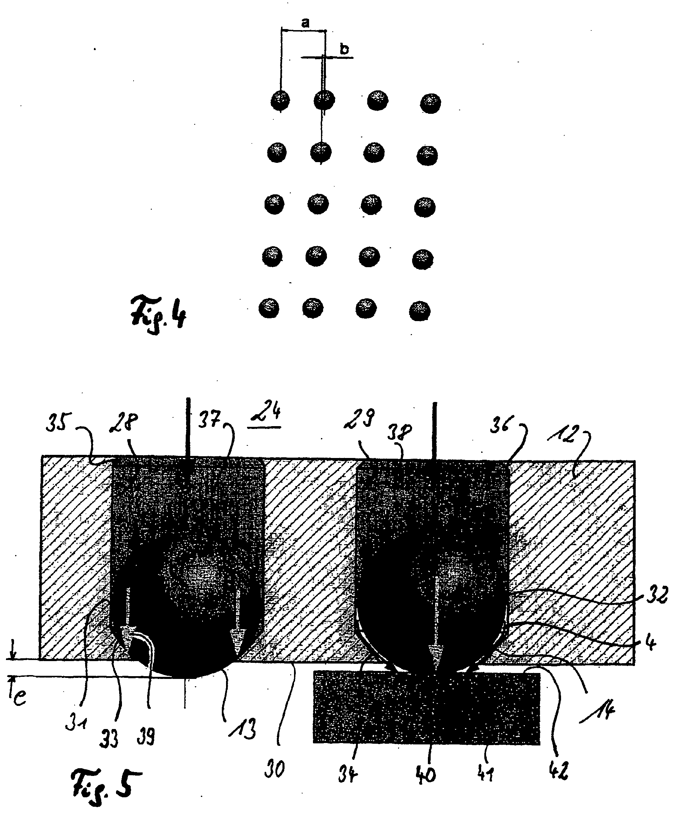

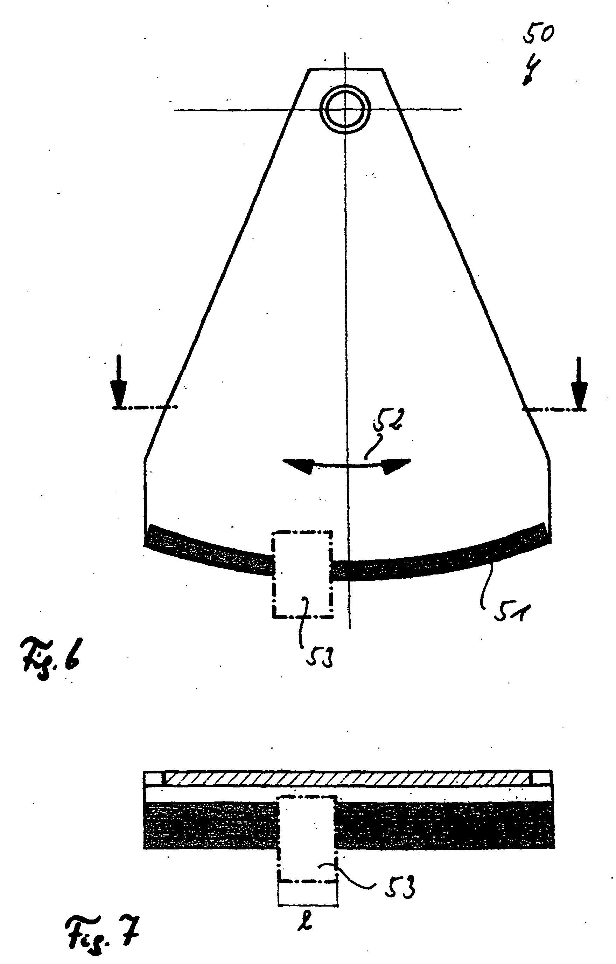

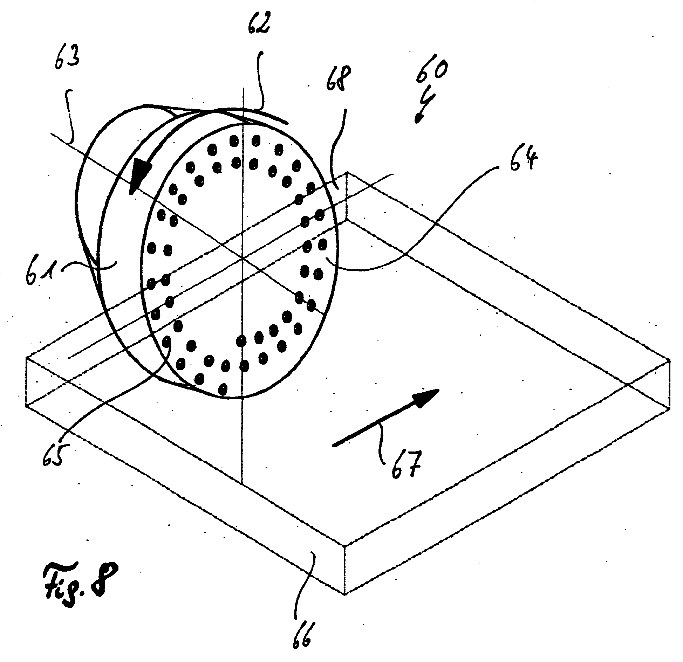

Über die Länge L des Werkzeug 1 ist eine Vielzahl ähnlicher Anordnungen vorgesehen. Die Wälzkörper 13 bis 22 sind jedoch nicht hintereinander angeordnet, sondern von Ebene zu Ebene wie in Figur 4 gezeigt um einen seitlichen Abstand b versetzt.

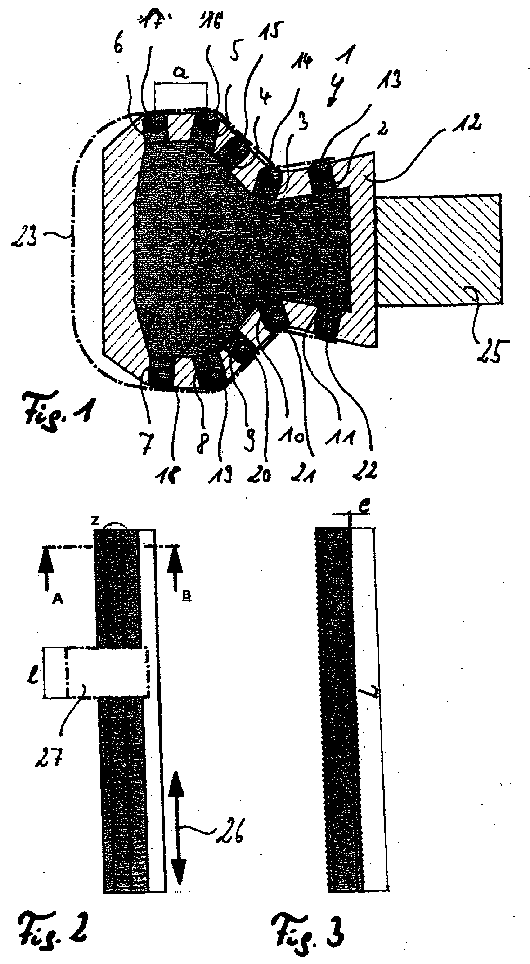

Der Werkzeugkörper 12 ist mit einem Einspannschaft 25 ausgerüstet, der die Schnittstelle zur Bearbeitungsmaschine (nicht gezeigt) bildet. Die Bearbeitungsmaschine führt bei dem beschriebenen Werkzeug 1 lediglich einne hin- und hergehende, lineare Bewegung aus wie sie in Figur 2 mit dem Pfeil 26 angedeutet ist, um das Werkstück 27 mit seiner Gesamtlänge 1 zu bearbeiten. Dabei hinterlässt jeder Wälzkörper 13 bis 22 eine parallel zur Bewegungsrichtung 26 des Werkzeugs 1 gerichtete Spur. Bei Fortschreiten der Bearbeitung erzeugt das Werkzeug 1 daher mit seiner Längsbewegung 26 eine Vielzahl an Spuren im Abstand b. Eine ausreichende Anzahl von Kugelebenen vorausgesetzt, wird die gesamte zu bearbeitende Oberfläche des Werkstücks 27 mit Spuren im Abstand b belegt und damit vollständig bearbeitet. Wird das Werkzeug 1 mit doppelter Länge ausgefüllt, kann eine aus Gründen der Prozesssicherheit gewünschte zweifache Bearbeitung in einem Durchgang erfolgen.

Die Figur 2 zeigt deutlich, dass die Wälzkörper auf schräg zur Längsachse des Werkzeugs 1 sich erstreckenden Linien angeordnet sind. Daraus resultiert der Versatz b, der zu einer flächigen Bearbeitung des Werkstücks 27 führt. Der gleiche Effekt kann auch dadurch erzielt werden, dass die Wälzkörper auf Linien angeordnet sind, die sich parallel zur Längsachse des Werkzeugs erstrecken, wenn das Werkzeug etwas schräg zur eingezeichneten Bewegungsrichtung 26 bewegt wird. Durch das Einstellen der Schräglage des Werkzeugs 1 zur Bewegungsrichtung 26 kann der Abstand b beliebig variiert werden, um entweder das Werkstück auf eng nebeneinander angeordneten Linien zu bearbeiten und/oder bei einem Durchgang mehrfach zu überarbeiten.

Die Figuren 2 und 3 zeigen, dass die Werkzeuglänge L ein Mehrfaches der Werkstücklänge 1 beträgt. Dies bedeutet, dass eine hohe Anzahl an Wälzkörpern nicht in Eingriff ist, während jeweils nur eine geringe Anzahl an Wälzkörpern arbeitet. Mit einem Werkzeug gemäß dem Stand der Technik ist eine derartige Anordnung nicht realisierbar, da die nicht in Eingriff befindlichen Wälzkörper die Druckflüssigkeit frei austreten lassen. Dies hat in den außerhalb des Werkstücks liegenden Werkzeugbereichen einen derart hohen Flüssigkeitsverlust zur Folge, dass die für alle Wälzkörper vorhandene gemeinsame Druckversorgung über die Kammer 24 nicht ausreichen würde.

Erfindungsgemäß werden die in Figur 5 schematisch dargestellten Wälzkörper 13, 14 so gelagert, dass sie im Ruhezustand im Zusammenwirken mit dem Werkzeugkörper 12 eine Ventilfunktion erhalten. Die Wälzkörper 13, 14 werden in Bohrungen 28, 29 des Werkzeugkörpers 12 derart gehalten, dass sie über die Außenkontur 30 des Werkzeugkörpers 12 um das Maß e exponiert sind. Wälzkörper 13 bzw. 14 und Bohrung 28 bzw. 29 sind so aufeinander abgestimmt, dass ein geringfügiger umlaufender Dichtspalt 31 bzw. 32 entsteht. Der als umlaufender Kragen ausgebildete Ventilsitz 33 bzw. 34 verhindert das Herausfallen des Wälzkörpers 13 bzw. 14 aus dem Werkzeugkörper 12 und der umlaufende Kragen 35 bzw. 36 verhindert, dass die Wälzkörper 13 bzw. 14 in die innere Kammer 24 des Werkzeugs 1 hineinfallen.

Der in den Bohrungen 28, 29 wirksame Flüssigkeitsdruck, der in Figur 5 mit den Pfeilen 37 bzw. 38 angedeutet ist, erzeugt eine hydraulische Kraft 39 bzw. 40, die zum Ventilsitz 33 bzw. zum Werkstück 41 gerichtet ist. Auf diese Weise sorgt die Hydraulikkraft am Wälzkörper 13 für einen dichten Abschluss der Bohrung 28 und verhindert damit einen Verlust von Druckflüssigkeit im Ruhezustand des Wälzkörpers 13.

Trifft der Wälzkörper 14 aufgrund der Linearbewegung 26 des Werkzeugs 1 auf das Werkstück 41, so wird er durch das Werkstück 41 angehoben und die nach wie vor vorhandene hydraulische Kraft in der Bohrung 29 drückt den Wälzkörper 14 nunmehr gegen die Werkstückoberfläche 42. Die mit dem Pfeil 40 angedeutete Kraft der Hydraulikflüssigkeit erzeugt hohe Druckspannungen in der Werkstückoberfläche 42, die zur Plastifizierung der Randschicht und zur der gewünschten Umformung derselben führt.

Der Dichtspalt 31 bzw. 32 ist so bemessen, dass er als hydraulische Drossel wirkt und nur eine geringe Flüssigkeitsmenge, die mit dem Pfeil 43 angedeutet ist, aus der Druckkammer entweichen lässt. So wird einerseits der erforderliche Druck zur fortdauernden Erzeugung der Walzkraft in der Druckkammer erhalten und andererseits kann der Wälzkörper 14 praktisch reibungsfrei in der Bohrung 29 rotieren. Auf diese Weise kann der Wälzkörper 14 auf der Werkstückoberfläche 42 abrollen, bis das Werkstückende erreicht ist und der Wälzkörper 14 aufgrund der hydraulischen Kraft wieder in die am Wälzkörper 13 dargestellte Ruhestellung austreten kann.

Für Werkstücke mit kreisbogenförmigen Nuten ist das in den Figuren 6 und 7 gezeigte Werkzeug 50 vorgesehen. Bei diesem Werkzeug ist der wirksame Bereich 51 des Werkzeugs 50 nicht gerade sondern als Kreisbogensegment ausgebildet. Die Bearbeitungsbewegung 52 erfolgt dabei nicht linear sondern als Kreis- oder Kreissegmentbewegung. Dadurch können bogenförmige Flächen am Werkstück 53 auf der Länge 1 des Werkstücks 53 bearbeitetet werden.

Eine weitere Ausführungsform eines Walzwerkzeuges zeigt die Figur 8. Bei diesem Walzwerkzeug wird der Werkzeugkörper 61 entsprechend der Pfeilrichtung des Pfeiles 62 um die Achse 63 gedreht. Der Werkzeugkörper 61 hat eine plane Fläche 64, auf der mehrere Wälzkörper 65 spiralförmig angeordnet sind.

Ein gestrichelt und durchsichtig dargestelltes Werkstück 66 wird translatorisch entsprechend der Richtung des Pfeiles 67 derart am Werkzeug entlanggeführt, dass die Seitenfläche 68 des Werkstücks 66 wie mit einer Polierscheibe mittels des Werkstücks 60 und insbesondere der Wälzkörper 65 bearbeitet wird.

Durch die translatorische Bewegung des Werkstücks und die rotatorische Bewegung des Werkzeugs wird die Seitenfläche 68 des Werkstücks 66 vollflächig bearbeitet.

## Patentansprüche

1. Verfahren zum Walzen eines Werkstücks (27) mit einem Walzwerkzeug (1) mit mehreren in hydrostatischen Lagern (2) angeordneten Wälzkörpern (13), ***dadurch gekennzeichnet, dass*** während des Walzens nur ein Teil der Wälzkörper (13) in Eingriff mit dem Werkstück (27) ist und die nicht mit dem Werkstück (27) in Eingriff stehenden Wälzkörper (13) das hydrostatische Lager (2) im wesentlichen abdichten.

2. Verfahren nach Anspruch 1, ***dadurch gekennzeichnet, dass*** das Walzwerkzeug (1) linear oder rotatorisch bewegt wird.

3. Verfahren nach Anspruch 1 oder 2, ***dadurch gekennzeichnet, dass*** bei einer linearen Bewegung des Walzwerkzeugs (1) in einer Richtung (26) mehr als dieselbe Stelle des Werkstücks (27) bearbeitet wird.

4. Walzwerkzeug (1) mit mehreren in hydrostatischen Lagern (2) angeordneten Wälzkörpern (13), ***dadurch gekennzeichnet, dass*** die hydrostatischen Lager (2) im Bereich der Wälzkörper (13) jeweils eine umlaufende Dichtung (32) aufweisen , wodurch die nicht mit einem Werkstück in Eingriff stehenden Wälzkörper (13) das hydrostatische Lager(2)im wesentlichen abdichten.

5. Walzwerkzeug (1) nach Anspruch 4, ***dadurch gekennzeichnet, dass*** die hydrostatischen Lager (2) einen Dichtspalt aufweisen, der derart bemessen ist, dass er als hydraulische Drossel wirkt.

6. Walzwerkzeug (1) nach Anspruch 4 oder 5, ***dadurch gekennzeichnet, dass*** die Wälzkörper (13) auf einer Fläche verteilt angeordnet sind.

7. Walzwerkzeug nach Anspruch 6, ***dadurch gekennzeichnet, dass*** die Fläche in mindestens einer Richtung gebogen ausgebildet ist.

8. Walzwerkzeug nach Anspruch 6 oder 7, ***dadurch gekennzeichnet, dass*** die Fläche in mindestens einer Richtung abgeknickt ausgebildet ist.

9. Walzwerkzeug nach einem der Ansprüche 6 bis 8, ***dadurch gekennzeichnet, dass*** in Bearbeitungsrichtung (26) hintereinanderangeordnete Wälzkörper (13) um eine Länge b versetzt angeordnet sind.

## Claims

1. A method of rolling a workpiece (27) with a rolling tool (1) having a plurality of rolling members (13) disposed in hydrostatic bearings *(2), **characterized in that*** only some of said rolling members (13) are engaged with the workpiece (27) during rolling, the rolling members (13) not being engaged with the workpiece (27) substantially sealing the hydrostatic bearing (2).

2. The method as set forth in claim 1, ***characterized in that*** the rolling tool (1) is caused to move linearly or to revolve.

3. The method as set forth in claim 1 or 2, ***characterized in that**,* when the rolling tool (1) is moving linearly in one direction (26), more than the same area of the workpiece (27) is machined.

4. A rolling tool (1) with a plurality of rolling members (13) disposed in hydrostatic bearings (2), ***characterized in that*** said hydrostatic bearings (2) each have one perimeter seal (32) in the region of the rolling members (13) so that the rolling members (13) not being engaged with the workpiece substantially seal the hydrostatic bearing (2).

5. The rolling tool (1) as set forth in claim 4, ***characterized in that*** the hydrostatic bearings (2) have a seal gap dimensioned so as to act as a hydraulic throttle.

6. The rolling tool (1) as set forth in claim 4 or 5, ***characterized in that*** the rolling members (13) are disposed so as to be spaced on a surface.

7. The rolling tool as set forth in claim 6, ***characterized in that*** the surface is configured to be curved in at least one direction.

8. The rolling tool as set forth in claim 6 or 7, ***characterized in that*** the area is configured to be bent in at least one direction.

9. The rolling tool as set forth in any one of the claims 6 through 8, ***characterized in that*** rolling members (13) disposed one behind the other in the machining direction (26) are disposed offset by a length b.

## Revendications

1. Procédé de laminage d'une pièce (27) à usiner avec un outil de laminage (1) avec plusieurs organes de laminage (13) disposés dans des paliers hydrostatiques (2), ***caractérisé en ce que**,* pendant le laminage, seule une partie des organes de laminage (13) est en prise avec la pièce à usiner (27) et que les organes de laminage (13) qui ne sont pas en prise avec la pièce (27) à usiner assurent l'étanchéité du palier hydrostatique (2).

2. Procédé selon la revendication 1, ***caractérisé en ce que*** l'outil de laminage (1) est animé d'un mouvement linéaire ou d'un mouvement de rotation.

3. Procédé selon la revendication 1 ou 2, ***caractérisé en ce que**,* si l'outil de laminage (1) se déplace linéairement dans une direction (26), plus que le même endroit de la pièce (27) est usiné.

4. Outil de laminage (1) avec plusieurs organes de laminage (13) disposés dans des paliers hydrostatiques (2), ***caractérisé en ce que*** les paliers hydrostatiques (2) comportent chacun un joint d'étanchéité (32) périphérique dans la région des organes de laminage (13) de sorte que les organes de laminage (13) qui ne sont pas en prise avec la pièce à usiner assurent l'étanchéité du palier hydrostatique (2).

5. Outil de laminage (1) selon la revendication 4, ***caractérisé en ce que*** les paliers hydrostatiques (2) comportent une fente d'étanchéité dimensionnée de manière à faire office d'étranglement hydraulique.

6. Outil de laminage (1) selon la revendication 4 ou 5, ***caractérisé en ce que*** les organes de laminage (13) sont disposés de manière à être répartis sur une surface.

7. Outil de laminage la revendication 6, ***caractérisé en ce que*** la surface est conformée en forme de courbe dans au moins une direction.

8. Outil de laminage selon la revendication 6 ou 7, ***caractérisé en ce que*** la surface est coudée dans au moins une direction.

9. Outil de laminage selon une au moins des revendications 6 à 8, ***caractérisé en ce que*** des organes de laminage (13) disposés les uns derrière les autres suivant la direction d'usinage (26) sont décalés d'une longueur b.
